# EUROPEAN PATENT APPLICATION

(11) **EP 2 336 995 A2**
(43) Date of publication of application: **22.06.2011**
(21) Application number: 10188061.5
(22) Date of filing: 19.10.2010
(51) Int. Cl.: G08C 17/02, G08C 23/04

(54) **RUI server, RUI client and control method thereof**

(30) Priority: 18.12.2009 KR 20090126611
(71) Applicant: SAMSUNG ELECTRONICS CO., LTD., Suwon-si Gyeonggi-do 442-742 (KR)
(72) Inventor: Kim, Dong-uk, Gyeonggi-do (KR); Kang, Eun-jung, Gyeonggi-do (KR)
(74) Representative: Fearnside, Andrew Simon

(57) **Abstract**

Disclosed are a remote user interface (RUI) server (100) including a communication unit (110) which communicates with an RUI client (200) through a network; and a controller (140) which controls the communication unit to transmit user interface (UI) information having horizontal UI information and vertical UI information.

## Description

### BACKGROUND

### 1. Field

Apparatuses and methods consistent with the exemplary embodiments relate to a remote user interface (RUI) server, an RUI client and a method of controlling the same, and more particularly, though not exclusively, to an RUI server and an RUI client and a method of controlling the same, which transmit and receive an user interface (UI) of a website.

### 2. Description of the Related Art

Studies for improving home network technology have been pursued by many industry standard groups such as a digital living network alliance (DLNA), a home audio-video interoperability (HAVi) and a universal plug and play (UPnP).

In the home network, a remote user interface (RUI) technique is employed when a device controls a function of another device. In brief, the RUI technique is based on a client-server architecture. An RUI client may receive an UI from an RUI server, and a user in the RUI client may use the UI to control the RUI server by the RUI technique.

Having the CEA-2014 standard serve as the RUI standard defines an UPnP network and a frame work and a protocol for an RUI on the Internet. According to the CEA-2014 standard, an UPnP device (RUI server) may provide an UI of a CE-HTML type webpage, and a user may remotely control an application of the UPnP device through the CE-HTML type webpage. CE-HTML is a special version of HTML. based on HTML.

### SUMMARY

Accordingly, one or more exemplary embodiments provide an RUI server and an RUI client and a method of controlling the same, capable of easily changing a horizontal and a vertical UI.

The exemplary embodiments are also to provide an RUI server and an RUI client and a method of controlling the same, which provide an accurate and clean UI without change of the UI by the RUI client.

According to an exemplary embodiment, there is provided a remote user interface (RUI) server including: a communication unit which communicates with an RUI client through a network; and a controller which control the communication unit to transmit UI information comprising horizontal UI information and vertical UI information through the communication unit.

The controller may control the communication unit to transmit one UI page comprising a horizontal UI page and a vertical UI page.

The controller may control the communication unit to transmit horizontal UI address information and vertical UI address information to the RUI client.

The controller may perform a profile matching with the RUI client if the RUI client is connected thereto, and may control the communication unit to transmit the horizontal UI address information and the vertical UI address information to the RUI client when the profile matching is performed.

The controller may insert one of the horizontal UI address information and the vertical UI address information into UI information comprising the other of the horizontal and vertical UI address information, and may controls the communication unit to transmit the UI information having both horizontal and vertical UI address information to the RUI client.

According to an exemplary embodiment, there is provided an RUI client including: a communication unit which communicates with an RUI server and receives UI information comprising horizontal UI information and vertical UI information; a sensor which senses a user selection of selecting one of a horizontal mode for displaying an RUI horizontally and a vertical mode for displaying an RUI vertically; and a controller which displays an RUI on a display unit in one of the horizontal mode and the vertical mode according to the user selected one of the horizontal UI information and the vertical UI information.

According to an exemplary embodiment, there is provided a method of controlling an RUI server which communicates with an RUI client, the method including: starting the communication with the RUI client; and transmitting UI information having horizontal UI information and vertical UI information to the RUI client.

According to an exemplary embodiment, there is provided a method of controlling an RUI client including a sensor, the method including: receiving UI information having horizontal UI information and vertical UI information; sensing a user selection of one of a horizontal mode for displaying an RUI horizontally and a vertical mode for displaying an RUI vertically; and displaying an RUI on the display unit in one mode of the horizontal mode and the vertical mode based on the horizontal UI information and the vertical UI information corresponding to the user selection.

### BRIEF DESCRIPTION OF THE DRAWINGS

The above and/or other aspects will become apparent and more readily appreciated from the following description of the exemplary embodiments, taken in conjunction with the accompanying drawings, in which:

Fig. 1 is a schematic view showing an UI providing system in accordance with an exemplary embodiment;

Fig. 2 is a control block diagram of the UI providing system shown in Fig. 1;

Fig. 3 is a control flowchart showing a method of controlling the UI providing system shown in Fig. 2;

Fig. 4 shows an UI page provided from an RUI server shown in Fig. 3;

Fig. 5 shows how a selected area is applied in accordance with the exemplary embodiment;

Fig. 6 is a control flowchart showing another method of controlling the UI providing system shown in Fig. 2; and

Fig. 7 is a control flowchart showing still another method of controlling the UI providing system shown in Fig. 2.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

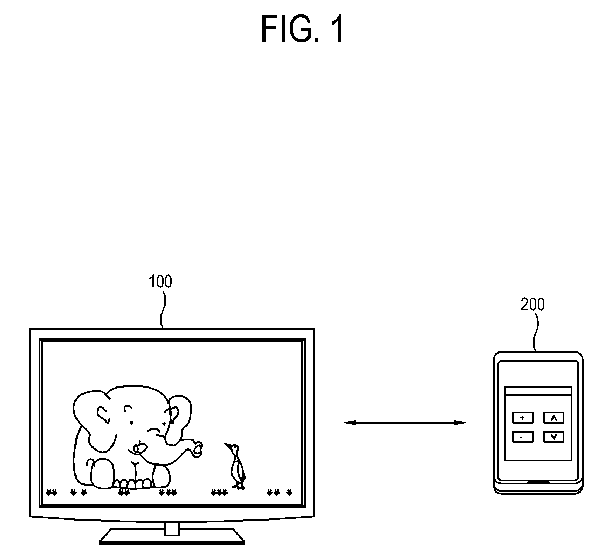

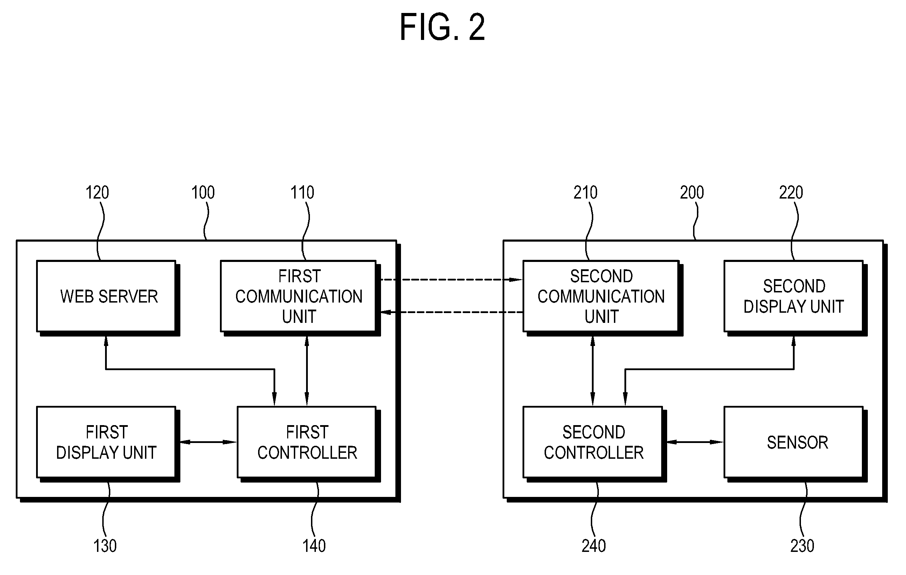

Fig. 1 is a schematic view showing a user interface (UI) providing system in accordance with an exemplary embodiment, and Fig. 2 is a control block diagram of the UI providing system shown in Fig. 1. The remote user interface (RUI) providing system of the present embodiment, which provides an RUI, may include an RUI server 100 and an RUI client 200. Various RUI techniques such as CEA-2014, XHT (expandable home theater), WiDex (widget description exchange service), and RDP (Remote Desktop Protocol) have been examined. The RUI is a mechanism for enabling the RUI client 200 to perform a rendering and a control of an RUI server's application. Herein, the application is not executed by the RUI client 200, but by the RUI server 100.

The RUI client 200 may control the RUI server 100 by using UI information received therefrom. The UI information, which indicates components constituting an UI transmitted from the RUI server 100 to the RUI client 200, is a collective term for all types of data such as icons, pull-down menus, buttons, scrollbars, windows, texts, A/V data (audio, video, and pictures), UI address or the like.

As shown in Figs. 1 and 2, the RUI server 100 may include a television or, preferably, an internet protocol (IP) TV and a computer system or a personal terminal. Alternatively, the RUI server 100 may include a large format display (LFD), a table top display (TPD) or the like. The RUI server 100 may provide an UI page of a web server 120 to the RUI client 200. The RUI client 200, which typically includes a rectangular display unit 220, may include a portable personal terminal that can be easily carried by a user. The RUI client 200 may include a monitor or a pivotable television as the second display unit 220.

As shown in Fig. 2, the RUI server 100 may include a first communication unit 110, the web server 120, a first display unit 130, and a first controller 140 which controls the first communication unit 110, the web server 120, the first display unit 130 and the like. The RUI client 200 may include a second communication unit 210, the second display unit 220, a sensor 230, and a second controller 240 which controls the second communication unit 210, the second display unit 220, the sensor 230 and the like.

The first communication unit 110 and the second communication unit 210 may perform the discoveries of the RUI server 100 and the RUI client 200 under the controls of the first controller 140 and the second controller 240, and receive and transmit various control signals and UI information having an UI page between the RUI server 100 and the RUI client 200. The first communication unit 110 and the second communication unit 210 may respectively include communication modules corresponding to various communication methods such as Bluetooth, Wi-Fi (wireless fidelity), zigbee, IR communication, RF communication, and wired communication.

In the meantime, middleware such as UPnP, HAVi, java intelligent network infra-structure (JINI), video electronics standards association (VESA), and digital living network alliance (DLNA) may support a home networking capable of sharing digital contents such as music, picture, and video stored in an electronic apparatus such as a computer, a home electric product, and a portable terminal. The first communication unit 110 and the second communication unit 210 in accordance with the present exemplary embodiment may perform communication of the RUI based on the Internet and the UPnP network according to a web-based protocol standard and a CEA-2004 standard defining a frame work. Here, CEA-2004 is the acronym for web-based consumer electronics association's-2004.

The web server 120 may provide a web-based UI page to the RUI client 200.

Each of the first display unit 130 and the second display unit 220 may include a plasma display panel, an organic light-emitting panel made of an organic material, a liquid panel having a liquid layer or the like to display an image signal and further include a panel actuator which actuates such a panel. As shown in Fig. 1, when the RUI server 100 is a television, the RUI server 100 may include the first display unit 130. However, the first display unit 130 may not belong to essential components and thus be omitted. The second display unit 220 may display an UI page received from the RUI server 100.

The sensor 230 in the RUI client 200 may sense a user selection of selecting one of a horizontal mode for displaying the RUI horizontally and a vertical mode for displaying the RUI vertically. The sensor 230 may also include a gyrosensor which senses a direction in which the second display unit 220 is moved vertically or horizontally by a user or a user input unit such as a touch panel which senses a user's input. The configuration of the sensor 230 is not limited to a specific hardware. Information sensed through the sensor 230 may be transferred to the second controller 240.

The second controller 240 may discover the RUI server 100 according to the RUI standard such as CEA-2014 through the second communication unit 210 and then start the communication with the RUI server 100. The detailed description related to such discovery will be omitted. In the RUI client 200 of the present exemplary embodiment, the second controller 240 may include a control point. Of course, in the case that the control point is separated from the RUI client 200, the discovery may be performed by such an external control point and UI information may also be transmitted to the RUI client 200 through the control point.

If the communication with the RUI client 200 is started, the first controller 140 may transmit UI information having horizontal and vertical UI information to the RUI client 200.

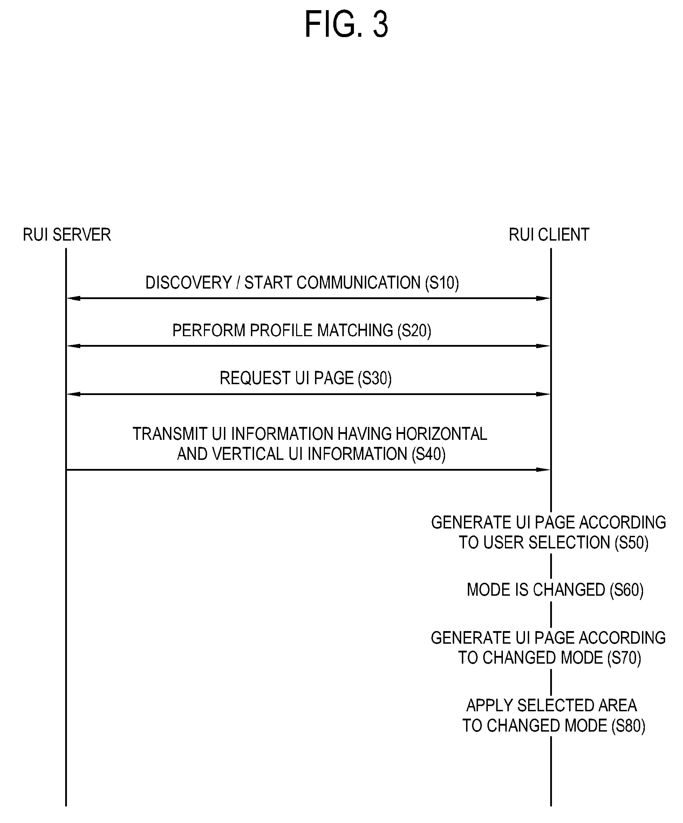

Fig. 3 is a control flowchart showing a method of controlling the UI providing system shown in Fig. 2. Hereinafter, an UI providing method will be described with reference to Fig. 3.

As described above, the RUI server 100 and the RUI client 200 may first discover each other to start the communication with each other (S10).

After such a discovery operation, a profile matching is performed between the RUI server 100 and the RUI client 200 (S20). Information related to the second display unit 220, e.g., usable resolution, the number of pixels, UI profile and the like may be transferred to the RUI server 100. Then, an UI based on such profile matching may be transmitted to the RUI server 100.

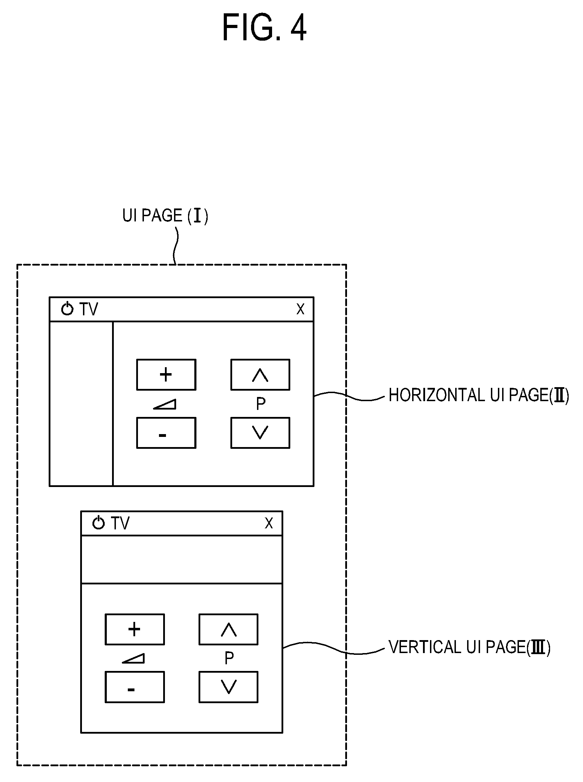

If the RUI client 200 requests an UI page (S30), the RUI server 100 may transmit to the RUI client 200 UI information having horizontal and vertical UI information corresponding to the requested UI page (S40). The RUI server 100 of the present exemplary embodiment may transmit to the RUI client 200 UI page I having both a horizontal and a vertical UI page II and III as shown in Fig. 4. In other words, the RUI server 100 may transmit to the RUI client 200 one HTML script including information related to the horizontal and the vertical UI page. In one HTML script, a function for changing any one of the horizontal and the vertical UI page to the other UI page may be included in a script, e.g., java script.

The second controller 240 may generate and display an UI page according to a user selection (S50). For example, when the UI page is requested, if a display mode of the second display unit 220 is a horizontal mode, the second controller 240 may select and display the horizontal UI page II of the transmitted UI page I. The second controller 240 may include a HTML web browser for rendering and displaying the transmitted UI.

Thereafter, if the display mode is changed by a user (S60), i.e., the display mode is changed to a vertical mode, the second controller 240 may generate the vertical UI page III corresponding to the changed vertical mode to display it on the second display unit 220 (S70). The second controller 240 may call a function in form of a script corresponding to the horizontal or the vertical mode. Then, the displayed UI page may be changed by the called function. In accordance with the present exemplary embodiment, when the profile matching is performed, if one UI page I is received, a UI page corresponding to the display mode selected by a user may be displayed without an additional interaction with the RUI server 100 even though the display mode is changed by the user. In addition, since the RUI client 200 merely re-generates the UI page by using the given information without adjusting or changing the resolution of the UI page, it is possible to display the high-quality UI page having high reliability.

According to a related art method, when the profile matching between an RUI server and an RUI client is performed, a UI profile is not able to be changed after an optimized UI profile information is selected considering a second display unit. Accordingly, even though a user changes a display mode, a UI page according to the fixed UI profile is provided to the RUI client. Therefore, an inadequate display mode may be displayed. Specifically, an upper or a lower end of the UI page may be cut in a horizontal mode and a left or a right end of the UI page may be cut in a vertical mode. Alternatively, the UI page may be extended in a vertical or a horizontal direction. As a result, it is difficult for the user to display a clean high-quality UI page.

The RUI server 100 of the present exemplary embodiment may provide the RUI client 200 with both the horizontal UI page corresponding to the horizontal mode and the vertical UI page corresponding to the vertical mode. The RUI client 200 may selectively generate and display any one of the horizontal and the vertical UI page as the UI page according to a user's request. In other words, the RUI client 200 may display an UI page desired by a user without additionally adjusting a resolution by using received UI information.

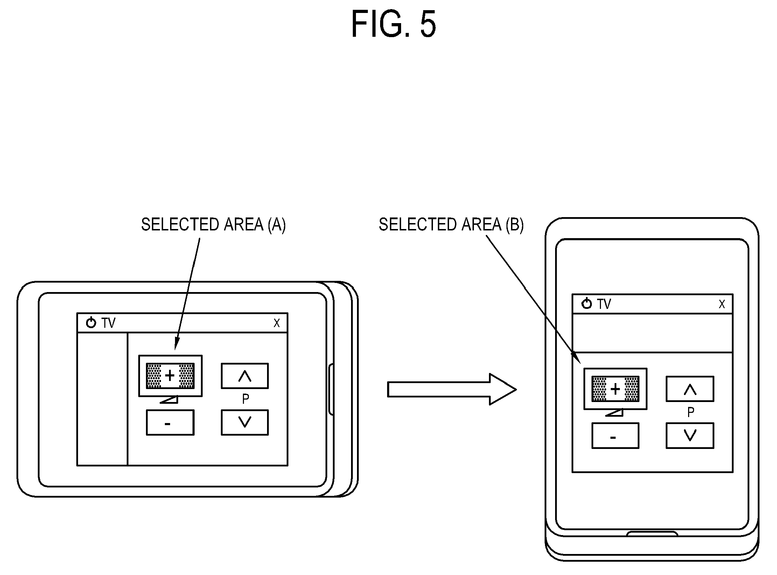

If the display mode is changed, the second controller 240 may apply a selected area to the changed mode (S80). Fig. 5 shows how the selected area is applied. As shown in Fig. 5, if the display mode is changed from the horizontal mode to the vertical mode, an area A that was selected or actuated in the horizontal mode may become an area B that is maintained to be selected or actuated even though the UI page is changed. In other words, an icon "+" that has been actuated in the horizontal mode, i.e., in the horizontal UI page may also be being actuated in the vertical mode, i.e., in the UI page. The second controller 240 may apply a selected area to the changed display mode such that a user is able to keep performing a work or a control that has been performed even if the display mode is changed.

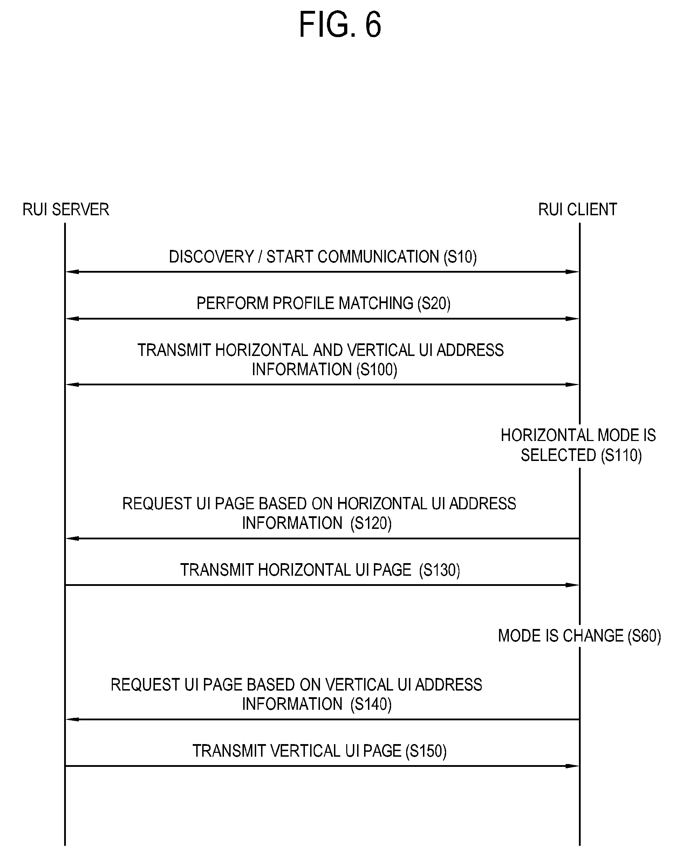

Fig. 6 is a control flowchart showing a method of controlling the UI providing system shown in Fig. 2, according to another exemplary embodiment. In even the present exemplary embodiment, the stage S10 where the discovery between the RUI server 100 and the RUI client 200 is performed to start the communication and the stage S20 where the profile matching therebetween is performed are also carried out as shown in Fig. 3.

If the profile matching is performed or the RUI client 200 requests an UI page, the first controller 140 may transmit to the RUI client 200 horizontal UI address information and vertical UI address information, i.e., both URLs related to a horizontal UI page and a vertical UI page (S100). In other words, the first controller 140 may transmit to the RUI client 200 all address information related to the two UI pages instead of transmitting thereto only one of the horizontal and the vertical UI address information according to the related art method.

If the horizontal mode is selected by a user (S110), the second controller 240 may request an UI page based on the horizontal UI address information (S120).

According to the request of the RUI client 200, the RUI server 100 may transmit to the RUI client 200 UI information having the horizontal UI page information (S130). Then, the second controller 240 may display a horizontal UI page based on the transmitted UI information.

Thereafter, if the display mode is changed (S60), the RUI client 200 may request an UI page based on the vertical UI address information (S140). Then, the RUI server 100 may transmit to the RUI client 200 UI information having the vertical UI page information (S150).

In accordance with the present exemplary embodiment, if an event for changing the display mode is generated by a user, the second controller 240 may call a function in a script. Then, the called function may request an UI page in an URL adequate for the changed mode. At this time, the RUI server 100 may not perform additional operation or control except for providing the UI page of the requested URL.

In addition, in the present exemplary embodiment, if the display mode is changed, the second controller 240 may apply a selected area to the changed mode. When transmitting to the UI information having the vertical UI page information, the RUI server 100 may additionally transmit information related to the selected area. The second controller 240 may also change the selected area based on the information.

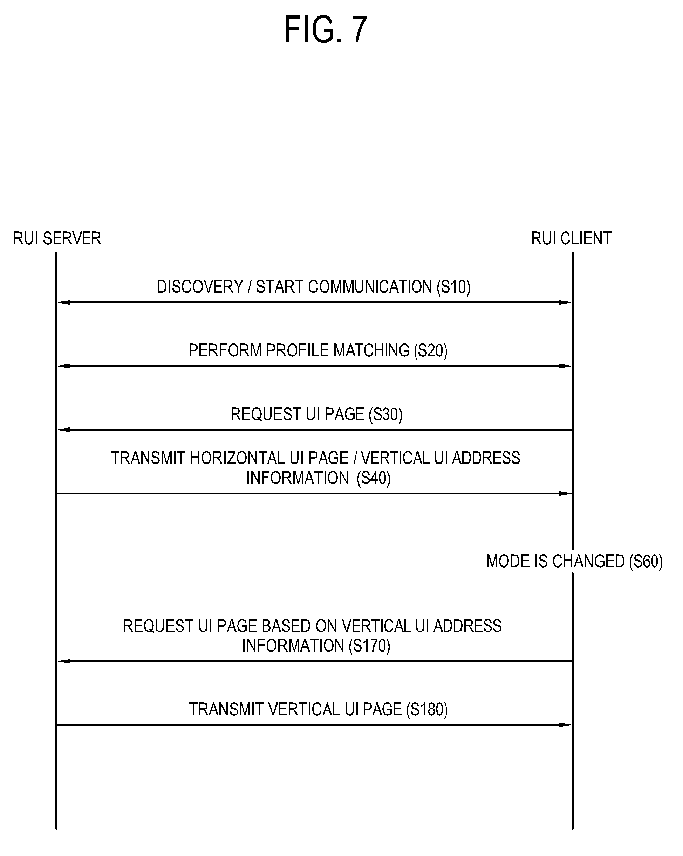

Fig. 7 is a control flowchart showing still another method of controlling the UI providing system shown in Fig. 2.

When the profile matching is performed or the RUI client 200 requests an UI page, the first controller 140 may insert any one of the vertical UI address information and horizontal UI address information into the other UI address information and transmit it to the RUI client 200.

For example, when the display mode of the second display unit 220 is the horizontal mode, if a user requests an UI page (S30), the RUI server 100 may transmit a horizontal UI page and insert vertical UI address information into UI information related to the horizontal UI page before transmitting it thereto. In other words, the RUI server 100 may insert a vertical UI URL into a HTML script related the horizontal UI page and transmit it to the RUI client 200.

Then, if the display mode is changed (S60), the RUI client 200 may request an UI page based on the received vertical UI address information (S170). Then, the RUI server 200 may transmit a vertical UI page (S180).

If the RUI client 200 requests an UI page when the display mode of the second display unit 220 is the vertical mode, the RUI server 100 may transmit a vertical UI page and insert horizontal UI address information into UI information related to the vertical UI page before transmitting it thereto.

In the exemplary embodiment, when RUI transmission is performed, if a user changes the display mode, the RUI server 100 may transmit all information to the RUI client 200 to provide an UI with a high reliability without additional control or manipulation of the RUI client 200 and the RUI server 100.

As described above, there is provided an RUI server and an RUI client and a method of controlling the same, capable of easily changing a horizontal and a vertical UI.

In addition, there is provided an RUI server and an RUI client and a method of controlling the same, which provide an accurate and clean UI without change of the UI by the RUI client.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A remote user interface (RUI) server (100) comprising:
a communication unit (110) arranged to communicate with an RUI client (200) through a network; and
a controller (140) arranged to control the communication unit to transmit user interface (UI) information comprising horizontal UI information and vertical UI information to the RUI client.

2. The server of claim 1, wherein the controller is arranged to control the communication unit to transmit one UI page comprising a horizontal UI page and a vertical UI page to the RUI client.

3. The server of any preceding claim, wherein the controller is arranged to control the communication unit to transmit horizontal UI address information and vertical UI address information to the RUI client.

4. The server of claim 3, wherein the controller is arranged to insert one of the horizontal UI address information and the vertical UI address information into UI information comprising the other of the horizontal and vertical UI address information, and to control the communication unit to transmit the UI information having both horizontal and vertical UI address information to the RUI client.

5. A remote user interface (RUI) client (200) comprising:
a communication unit (210) arranged to communicate with an RUI server and to receive user interface (UI) information comprising horizontal UI information and vertical UI information;
a sensor (230) arranged to sense a user selection of selecting one of a horizontal mode for displaying an RUI horizontally and a vertical mode for displaying an RUI vertically; and
a controller (240) arranged to display an RUI on a display unit in one of the horizontal mode and the vertical mode, according to the user selected one of the horizontal UI information and the vertical UI information.

6. The client of claim 5, wherein the communication unit is arranged to receive one UI page comprising a horizontal UI page and a vertical UI page, and the controller is arranged to display one of the horizontal UI page and the vertical UI page according to the user selection.

7. The client of any of claims 5 and 6, wherein the communication unit is arranged to receive horizontal UI address information and vertical UI address information, and the controller is arranged to request an UI page corresponding to the one of horizontal UI address information and vertical UI address information, based on the user selection.

8. The client of claim 7, wherein if the vertical UI information is included with the horizontal UI information when a user selects a horizontal mode, and the controller requests an UI page based on the vertical UI address information when the horizontal mode is changed to the vertical mode, and if the horizontal UI information is included with the vertical UI information when a user selects a vertical mode, and the controller requests an UI page based on the horizontal UI address information when the vertical mode is changed to the mode.

9. The client of any of claims 5 to 8, wherein the controller is arranged to apply an area actuated in the RUI before a mode change to the RUI after the mode change, when one of the horizontal mode and the vertical mode is changed to the other mode,.

10. A method of controlling a remote user interface (RUI) server which communicates with an RUI client, the method comprising:
starting communication with the RUI client (S10); and
transmitting user interface (UI) information comprising horizontal UI information and vertical UI information to the RUI client (S40).

11. The method of claim 10, wherein the transmitting of UI information to the RUI client comprises transmitting one UI page comprising a horizontal UI page and a vertical UI page.

12. The method of claim 10, wherein the transmitting UI information to the RUI client comprises inserting one of the horizontal UI address information and the vertical UI address information into the UI information comprising the other UI address information.

13. A method of controlling a remote user interface (RUI) client comprising a sensor, the method comprising:
receiving UI information comprising horizontal UI information and vertical UI information;
sensing a user selection of one of a horizontal mode for displaying an RUI horizontally and a vertical mode for displaying an RUI vertically; and
displaying an RUI on the display unit in one mode of the horizontal mode and the vertical mode based on the horizontal UI information and the vertical UI information corresponding to the user selection.

14. The method of claim 13, wherein the receiving UI information comprises receiving one UI page comprising a horizontal UI page and a vertical UI page, and
the displaying the RUI comprises displaying the horizontal UI page and the vertical UI page corresponding to the user selection.

15. The method of claim 13 or 14, wherein the receiving UI information comprises receiving horizontal UI address information and vertical UI address information, wherein the vertical UI information and the horizontal UI information are respectively included in different UI information, and
the displaying of the RUI comprises requesting an UI page based on the one of the horizontal UI address information and the vertical UI address information which corresponds to the user selection,
when one of the horizontal mode and the vertical mode is changed to the other mode, the displaying the RUI comprises requesting an UI page based on the UI address information of the other of the horizontal UI information and the vertical UI information.
